# EUROPEAN PATENT APPLICATION

(11) **EP 2 515 201 A1**
(43) Date of publication of application: **24.10.2012**
(21) Application number: 11162833.5
(22) Date of filing: 18.04.2011
(51) Int. Cl.: G06F 3/01, G06F 1/16

(54) **Portable electronic device and method of controlling the same**

(71) Applicant: Research In Motion Limited, Waterloo, ON N2L 3W8 (CA)
(72) Inventor: DeLuca, Michael, Joseph, Rolling Meadows, IL, Illinois 60008 (US); Hirsch, Alexander, Samson, Rolling Meadows, IL 60008 (US); Jano, Bashar, Rolling Meadows, IL 60008 (US)
(74) Representative: MERH-IP Matias Erny Reichl Hoffmann

(57) **Abstract**

A method comprises: detecting (200) a three-dimensional motion (404) relative to an electronic device (400) and determining (202) a corresponding three-dimensional gesture; determining (204) a context of the electronic device; and performing (208) a function based on the corresponding three-dimensional gesture and the context.

## Description

### FIELD OF TECHNOLOGY

The present disclosure relates to portable electronic and the control of such portable electronic devices.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, may be useful on handheld devices, which are small and have limited space for user input and output. The information displayed on the touch-sensitive displays may be modified depending on the functions and operations being performed.

Improvements in electronic devices are desirable.

### SUMMARY

In one aspect there is provided, a method including: detecting a three-dimensional motion relative to an electronic device and determining a corresponding three-dimensional gesture; determining a context of the electronic device; and performing a function based on the corresponding three-dimensional gesture and the context.

In another aspect there is provided, an electronic device including: object sensing hardware in communication with a processor for detecting a three-dimensional motion relative to an electronic device; a memory for storing a gesture database for mapping three-dimensional motion to gestures and a function mapping database for mapping gestures to functions based on a context; a processor for determining a corresponding three-dimensional gesture using the gesture database, determining a context of the electronic device using the function mapping database and performing a function associated with the corresponding three-dimensional gesture and the context.

In still another aspect there is provided, a cover including: a cover body having an opening for receiving a portable electronic device; and apertures extending through the cover body, the apertures for aligning with object sensing hardware of the portable electronic device when the portable electronic device is received in the cover; wherein three dimensional motion is detectable by the object sensing hardware.

### BRIEF DESCRIPTION OF THE DRAWINGS

Embodiments of the present disclosure will now be described, by way of example only, with reference to the attached figures, wherein:

FIG. 1 is a simplified block diagram of one example of a portable electronic device in accordance with the present disclosure;

FIG. 2 is a flowchart illustrating an example of a method of controlling an electronic device in accordance with the present disclosure;

FIG. 3 is a flowchart illustrating an example of a method of determining a context in accordance with the present disclosure; and

FIGS. 4 and 5 illustrate examples of a portable electronic device receiving a gesture in accordance with the present disclosure.

### DETAILED DESCRIPTION

The following describes a device and method including detecting a three-dimensional motion relative to an electronic device and determining a corresponding three-dimensional gesture; determining a context of the electronic device; and performing a function based on the corresponding three-dimensional gesture and the context.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, tablet computers, wirelessly enabled notebook computers, and so forth. The portable electronic device may also be a portable electronic device without wireless communication capabilities, such as a handheld electronic game device, digital photograph album, digital camera, or other device.

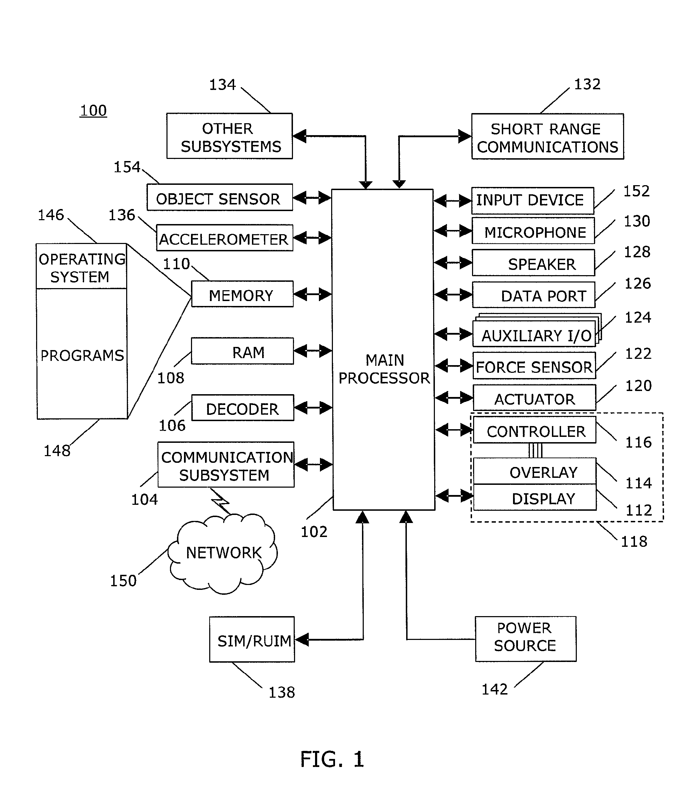

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, an object sensor 154, an auxiliary input/output (I/O) subsystem 124, a data port 126, a speaker 128, a microphone 130, short-range communications 132, and other device subsystems 134. The processor 102 may optionally interact with one or more actuators 120 to provide tactile feedback and one or more force sensors 122 to detect a force imparted on the touch-sensitive display 118. Interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an orientation sensor such as an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display may include a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected.

The touch-sensitive display 118 is also configured to detect a gesture. A gesture, such as a swipe, is a type of touch, that begins at an origin point and continues to a finishing point while touch contact is maintained. A swipe may be long or short in distance, or duration, or both distance and duration. Two points of the swipe may be utilized to determine a vector that describes a direction of the swipe. The direction may be referenced with respect to the touch-sensitive display 118, the orientation of the information displayed on the touch-sensitive display 118, or another reference. For the purposes of providing a reference, "horizontal" as utilized herein is substantially left-to-right or right-to-left relative to the orientation of the displayed information, and "vertical" as utilized herein is substantially upward or downward relative to the orientation of the displayed information. The origin point and the finishing point of the swipe may be utilized to determine the magnitude or distance of the swipe. The duration of the swipe may be determined from the origin point and finishing point of the swipe in time. The processor 102 receives data from the controller 116 to determine the direction, magnitude, and duration of the swipe. The gesture may be tracked and a plurality of sub-vectors determined for each gesture. The final sub-vector may be utilized to determine a distance and duration of a final portion of the gesture. The processor 102 receives data from the controller 116 to determine the speed of the swipe based on the distance and duration of the final portion of the gesture.

Three-dimensional gestures are performed relative to the portable electronic device 100, such as above the display 118, for example. A standard, two-dimensional, gesture on a touch-sensitive display may include motion in the x and y axes. Three-dimensional gestures further include a z axis component, which generally extends outwardly from the touch-sensitive display 118. Motion in the z axis may be away from or toward a plane of the touch-sensitive display 118 of the portable electronic device 100. Three-dimensional gestures may expand the number, type and variation of gestures that may be used to control the portable electronic device 100.

The object sensor 154 of the portable electronic device 100 may be used to detect three-dimensional gestures performed by an object, such as a finger, thumb or stylus, for example, when the object is not in contact with the touch-sensitive display 118. A three dimensional gesture may include a two-dimensional portion, in which the object is in contact with the touch-sensitive display 118, and a three-dimensional portion in which the object is not in contact with the touch-sensitive display 118.

In the example embodiments disclosed herein, a three-dimensional gesture is performed relative to the portable electronic device 100 without contacting the touch-sensitive display 118. In an example embodiment, the three-dimensional gesture begins upon first detection of the presence of an object relative to the portable electronic device 100, and ends when object motion is not detected for a period of time. In another example embodiment, in which object positions are detected in order to determine object motion, the three-dimensional gesture ends when two or more consecutive detected object positions are substantially similar. In another example embodiment, the object motion ends when the portable electronic device 100 determines that detected object motion corresponds to motion associated with a known gesture, such as stored in a gesture database in a memory of the portable electronic device 100.

Gestures may have different meanings based on a context of the portable electronic device 100. Contexts may include an application in focus and a device state, for example. Device states may include, for example, device GPS location, time and date, device environment, such as moving or at rest, in-holster or out of holster, for example, device operating mode and battery status. For example, a gesture may be mapped to a scroll page up function when running a web browser application on the portable electronic device 100, while the same gesture may be mapped to answer a call in a hands free mode function when the portable electronic device 100 is in motion in a vehicle. By mapping gestures to different functions based on the context, the functionality of the portable electronic device 100 may be increased.

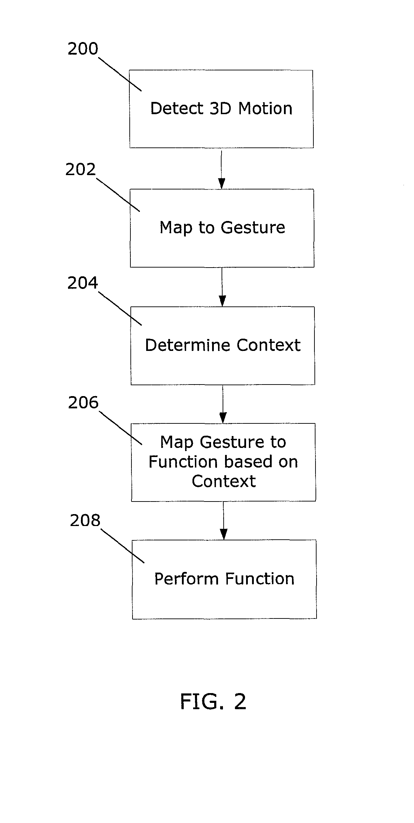

FIG. 2 is a flowchart illustrating an example of a method of controlling an electronic device. The method may be carried out by software executed by, for example, the processor 102. Coding of software for carrying out such a method is within the scope of a person of ordinary skill in the art given the present description. The method may contain additional or fewer processes than shown and described, and may be performed in a different order. Computer-readable code executable by, for example, the processor 102 of the portable electronic device 100 to perform the method, may be stored in a computer-readable medium.

The method of FIG. 2 includes detecting motion 200 relative to the portable electronic device 100, mapping the motion to a gesture 202, determining a context 204 of the portable electronic device 100, mapping the gesture to a function based on the determined context 206 and performing a function associated with the gesture 208.

Detecting motion 200 relative to the portable electronic device 100 may be performed using an object sensing method such as ultrasonic, infrared or proximity sensing, as will be understood by a person skilled in the art. In general, the object sensing methods employ at least one object sensor 154 that cooperates with the processor 102 to detect an object's motion in substantially real time.

Mapping the motion to a gesture 202 may be performed by searching a gesture database, which may include a look-up table. Electronic data representations of different motions are stored in the gesture database and associated with gestures. The motion detected 200 is compared to the stored electronic data representations and a corresponding gesture is determined.

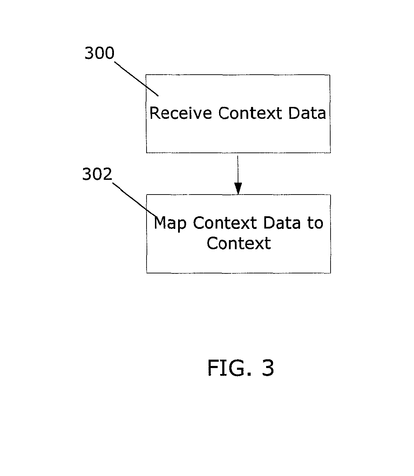

FIG. 3 is a flowchart illustrating an example method of determining a context 204, which may be performed in cooperation with the method of FIG. 2. The method of FIG. 3 includes: receiving 300 context data at processor 102 and mapping 302 the context data to a context. The context data may include: data associated with a device state, data identifying an application in focus, accelerometer data, which may be used to determine if a device is in motion, such as being carried by a person walking, travelling in a vehicle or at rest, for example. The context data may further include device position data received from a GPS (Global Positioning System) component in communication with the processor 102, device operating mode, such as silent mode, for example, battery status, time and date and device location such as in a holster, case or cover, for example. In addition, the context data may include device couplings such as a Bluetooth coupling between the device and a vehicle, for example. A device coupling may further uniquely identify the vehicle if the device is used to couple to multiple vehicles.

In other example embodiments, the context may be determined based on user input or a saved context schedule, for example.

Mapping the context information to a context may be performed with reference to a context database. The context data may be received at the processor 102 in response to: a request from the processor 102, at regular time intervals or in response to a change in context, for example.

Mapping the gesture to a function based on the determined context 206 may include accessing a function mapping database, which may include a look-up table. The function mapping database includes a correlation between gestures, contexts and functions. In some embodiments, gestures may be mapped to individual keystrokes. In addition, device context information may also be accessed and utilized in mapping the gesture. Once the function has been determined, the portable electronic device 100 performs 208 the mapped one or more function(s)

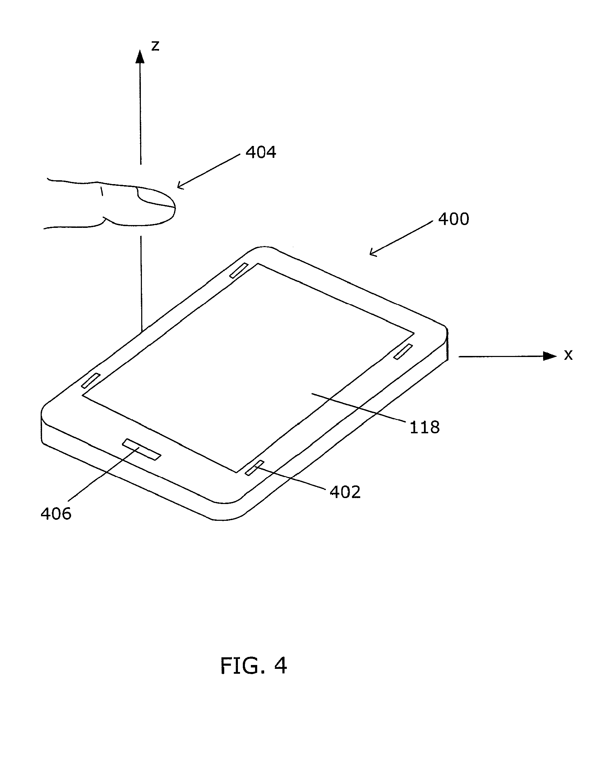

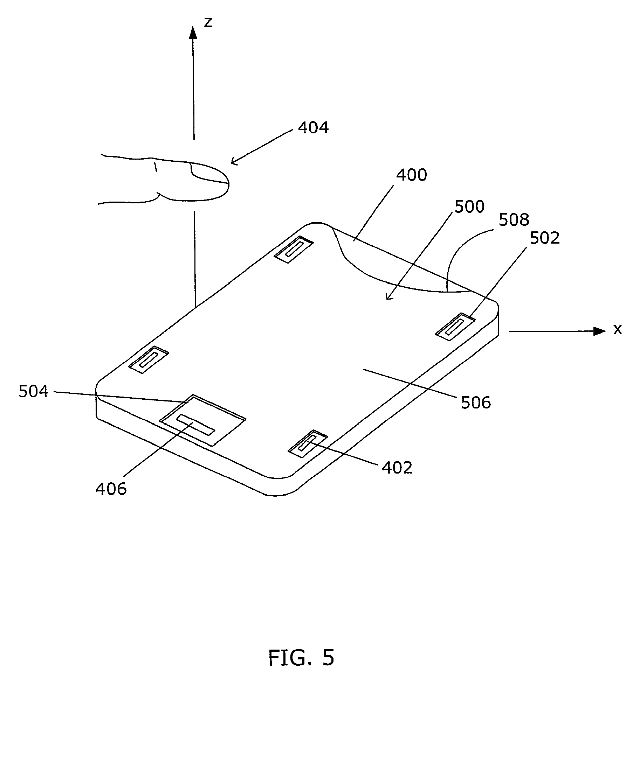

Continued reference is made to FIG. 2 with additional reference to FIGS. 4 and 5 to describe one example of a method of controlling a portable electronic device 100. The example portable electronic device 400 of FIG. 4 includes a microphone 406 arranged to receive acoustic signals generated by a plurality of transducers (not shown) via acoustic ports 402. Motion of an object 404 relative to the portable electronic device 100 may be detected 200 by the microphone 406. As will be understood by a person skilled in the art, the processor 102 receives data from the microphone 406 and determines positions of the object 404 over time based on triangulation of acoustic signals received by the microphone 406. The motion, a letter "S" motion for example, is then mapped to a letter "S" gesture 202.

A context is determined 204 based on context data that is received 300 by the processor 102. In the example of FIGS. 4 and 5, the context data is received from a sensor (not shown) of the portable electronic device 100 that is capable of detecting a holster, case or cover. The context data is mapped to the context 302 by accessing the context database and, in this example, the context is determined 204 to be "device out of holster". The gesture determined at 202 is then mapped to a function based on the "device out of holster" context by accessing the function mapping database. The function may be composing a new message in a messaging application, for example, and the device may then performs the function 208.

Referring now to FIG. 5, the portable electronic device 100 in this example is received in a holster, case or cover 500. The cover 500 includes a cover body 506 having an opening 508, apertures 502 at the locations of the acoustic ports 402 and a microphone aperture 504 at the location of the microphone 406. The letter "S" motion that was performed when the device was out of the cover 500 is performed when the device 400 is in the cover 500. The motion is detected 200 by the processor 102 based on data received from the microphone 406 and the motion is then mapped to the letter "S" gesture. The context is then determined 204 based on context data received from the sensor capable of detecting the presence of a cover. The context data is mapped to the context 302 by accessing the context database and the context is determined 204 to be "device in cover". The function may be determined to be muting an incoming call alert, for example, and the device may then perform the function 208.

It will be appreciated by a person skilled in the art that any cover including a cover body 506 having an opening 508 for receiving a portable electronic device 100 and apertures extending through the cover body 506 for aligning with object sensing hardware of the portable electronic device 100 may be used to facilitate detection of three dimensional motion by the object sensing hardware.

The example functions described in relation to FIGS. 4 and 5 may be any two different functions performed by the portable electronic device 400 in response to receiving two motion inputs that map to the same gesture.

In another example embodiment, the portable electronic device 400 may be received in a vehicle holster, case or cover, which may be mounted on a dashboard of the vehicle. In this example embodiment, the letter "S" gesture may cause the device to perform still a different function because the vehicle context is different from both the in cover and out of cover contexts. The function performed may be answering a call in hands-free mode, for example.

The cover 500 of FIG. 5 includes apertures 502, 504 that are located to accommodate hardware associated with an ultrasonic object sensing method. Apertures may be provided at different locations in order to accommodate object sensing hardware associated with other sensing methods. For example, for a two camera or other electro-magnetic detector object sensing method that uses the electromagnetic spectrum, either at, above or below the optical wavelength band, openings for the corresponding photon / electro-electromagnetic sensors may be provided in the cover in such a manner that the cover does not interfere with the object sensing method when the device is enclosed in the cover. As another example, when using an acoustic object sensing method, which uses the ultrasonic spectrum, opening may be provided for each transmitter, receiver and/or transceiver.

In some embodiments, the processor 102 may receive context data from multiple sources. For example, the device may be operating in silent mode while in the cover. In order to determine which function to perform when more than one context is determined, the processor 102 relies upon a context ranking, which is stored in device memory. When the contexts have been determined, the processor 102 performs the function associated with the highest ranking context. In one embodiment, the context ranking is a setting that may be modified by the user.

In another example embodiment, the holster, case or cover includes a clip having a rotating joint to enable wearing of the electronic device by a user in different rotation orientations relative to the ground when clipped to the user's belt, for example. In this embodiment, an upward vertical gesture detectable by the object sensing hardware may cause a music player to increase in volume, for example. Similar gestures may be interpreted using horizontal motions such as music player fast forward or rewind in response to front-to-back or back-to-front gestures, respectively. Combinations of vertical and horizontal gestures may also be detectable to cause the electronic device to perform a function. While operating in this context, random orientation of the electronic device relative to the ground due to rotation about the rotating joint may be considered when determining the gesture. For example, determination of the gesture may include determining the orientation of the device relative to the ground using an accelerometer, for example, when the device is in the holster, case or cover. When not in the holster, case or cover, the orientation of the device relative to the ground may not be considered.

In other example embodiments, the context may be an application that is in focus, or currently active. For example, a word processing application is in focus, or currently active, when an indicator, or cursor, is displayed and typing on a keyboard results in associated letters being displayed in the application. For a portable electronic device that includes a phone application, a calendar application and a messaging application, a single gesture, for example a letter "L" motion, may cause the device to perform different functions depending on the application that is in focus, or currently active. For example, when the phone application is active, receiving the "L" gesture may cause the application to call a particular number. When the calendar application is active, the "L" gesture may cause the calendar application to scroll to the last day of the month. When the messaging application is active, the "L" gesture may cause the application to send an e-mail message.

In other example embodiments, gestures may be mapped to different functions based on a state of an application in focus on the portable electronic device 100. For example, in a messaging application, a circle gesture may cause the portable electronic device to perform an address lookup function when an address field is active and the same circle gesture may cause the portable electronic device 100 to perform a spell check function when a body field is active. In this embodiment, a command map may be provided to associate gestures with functions based on a state of an application.

When operating in a context, such as when the device is in a cover, the user may not be looking at his or her hand when performing gestures. Therefore, gestures may be simpler and the number of gestures may be fewer. Using less complex components capable of recognizing and distinguishing between fewer gestures as a result of mapping gestures to a plurality of functions depending on the context may lead to reduced component costs and may also simplify gesture learning for users.

More complex gestures may still be used when operating the device in a regular operating mode in which the device is generally held in front of a user to facilitate viewing of the display 118 and the user's hand while making gestures.

Although the examples described herein include touch-sensitive displays 118, electronic devices without displays or having other types of displays may also be used to detect a three-dimensional motion relative to the electronic device and determine a corresponding three-dimensional gesture; determine a context of the electronic device; and perform a function based on the corresponding three-dimensional gesture and the context.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
detecting a three-dimensional motion relative to an electronic device (100) and determining a corresponding three-dimensional gesture;
determining a context of the electronic device (100); and
performing a function based on the corresponding three-dimensional gesture and the context.

2. A method as claimed in claim 1, wherein determining a context comprises receiving context data and mapping the context data to a context.

3. A method as claimed in claim 2, wherein the context data is received from a sensor capable of detecting a cover (500).

4. A method as claimed in claim 3, wherein the cover (500) comprises apertures (502) aligned with object sensing hardware to facilitate detection of three dimensional motion when the electronic device (100) is received in the cover (500).

5. A method as claimed in claim 4, wherein the function performed when the electronic device (100) is received in the cover (500) is different from the function performed when the electronic device (100) is not received in a cover (500).

6. A method as claimed in claim 2, wherein the context data is accelerometer data.

7. A method as claimed in claim 6, wherein the context determined based on the accelerometer data is one of: walking, travelling in a vehicle and resting.

8. A method as claimed in claim 1, wherein determining a three dimensional gesture comprises searching a gesture database.

9. A method as claimed in claim 2, wherein the function is determined using a look-up table.

10. A computer-readable medium comprising instructions executable on a processor (102) of the electronic device (100) for implementing the method of any of claims 1 to 9.

11. An electronic device (100) comprising:
object sensing hardware in communication with a processor (102) for detecting a three-dimensional motion relative to an electronic device (100);
a memory (110) for storing a gesture database for mapping three-dimensional motion to gestures and a function mapping database for mapping gestures to functions based on a context;
a processor (102) for determining a corresponding three-dimensional gesture using the gesture database, determining a context of the electronic device (100) using the function mapping database and performing a function associated with the corresponding three-dimensional gesture and the context.

12. An electronic device (100) as claimed in claim 11, comprising a cover-detecting sensor in communication with the processor (100) for determining the context.

13. An electronic device as claimed in claim 11, comprising an accelerometer (136) in communication with the processor (102) for determining the context.

14. An electronic device (100) as claimed in any of claims 11 to 13, wherein the context determined based on the accelerometer data is one of: walking, travelling in a vehicle and resting.

15. An electronic device (100) as claimed in any of claim 11 to 14, wherein the gesture database and the function mapping database comprise look-up tables.

16. An electronic device (100) as claimed in claim 12, wherein the function performed when the electronic device (100) is received in the cover (500) is different from the function performed when the electronic device (100) is not received in the cover (500).

17. A cover (500) comprising:
a cover body (506) having an opening (508) for receiving a portable electronic device (100); and
apertures (502) extending through the cover body, the apertures (502, 504) for aligning with object sensing hardware of the portable electronic device (100) when the portable electronic device (100) is received in the cover;
wherein three dimensional motion is detectable by the object sensing hardware.

18. A cover (500) as claimed in claim 17, wherein the apertures (502, 504) are for aligning with ultrasonic object sensing hardware of the portable electronic device (100).

## Amended claims

### Amended claims in accordance with Rule 137(2) EPC.

**1.** A method comprising:
detecting a three-dimensional motion of an object relative to an electronic device (100) utilizing object sensing hardware of the electronic device (100) and determining a three-dimensional gesture corresponding to the three-dimensional motion of the object utilizing a gesture database that maps three-dimensional motion to three-dimensional gestures;
determining a context of the electronic device (100); and
performing a function associated with the three-dimensional gesture and the context;
wherein the three-dimensional gesture is associated with more than one function.

**2.** A method as claimed in claim 1, wherein determining a context comprises receiving context data and mapping the context data to a context.

**3.** A method as claimed in claim 2, wherein the context data is received from a sensor capable of detecting a cover (500).

**4.** A method as claimed in claim 3, wherein the cover (500) comprises apertures (502) aligned with object sensing hardware to facilitate detection of three dimensional motion when the electronic device (100) is received in the cover (500).

**5.** A method as claimed in claim 4, wherein the function performed when the electronic device (100) is received in the cover (500) is different from the function performed when the electronic device (100) is not received in a cover (500).

**6.** A method as claimed in claim 2, wherein the context data is accelerometer data.

**7.** A method as claimed in claim 6, wherein the context determined based on the accelerometer data is one of: walking, travelling in a vehicle and resting,

**8.** A method as claimed in any one of claims 1 to 7, wherein determining a three-dimensional gesture comprises searching the gesture database,

**9.** A method as claimed in claim 2, wherein the function is determined using a look-up table.

**10.** A computer-readable medium comprising instructions executable on a processor (102) of the electronic device (100) for implementing the method of any one of claims 1 to 9.

**11.** An electronic device (100) comprising:
object sensing hardware in communication with a processor (102) for detecting three-dimensional motion of an object relative to thee electronic device (100);
a memory (110) for storing a gesture database for mapping three-dimensional motion of the object to three-dimensional gestures and a function mapping database for mapping the three-dimensional gestures to functions based on a context;
a processor (102) for determining the three-dimensional gesture corresponding to the three-dimensional motion using the gesture database, determining a context of the electronic device (100) and performing a function associated with the three-dimensional gesture and the context;
wherein the three-dimensional gesture is associated with more than one function.

**12.** An electronic device (100) as claimed in claim 11, comprising a cover-detecting sensor in communication with the processor (100) for determining the context.

**13.** An electronic device as claimed in claim 11, comprising an accelerometer (136) in communication with the processor (102) for determining the context.

**14.** An electronic device (100) as claimed in any of claims 11 to 13, wherein the context determined based on the accelerometer data is one of: walking, travelling in a vehicle and resting.

**15.** An electronic device (100) as claimed in any of claim 11 to 14, wherein the gesture database and the function mapping database comprise look-up tables.

**16.** An electronic device (100) as claimed in any one of claims 12 to 15, wherein the function performed when the electronic device (100) is received in the cover (500) is different from the function performed when the electronic device (100) is not received in the cover (500).

**17.** A cover (500) comprising:
a cover body (506) having an opening (508) for receiving a portable electronic device (100); and
apertures (502) extending through the cover body, the apertures (502, 504) for aligning with the object sensing hardware of the portable electronic device (100) when the portable electronic device (100) of any one of claims 11 to 16 is received in the cover;
wherein three dimensional motion of the object is detectable by the object sensing hardware.

**18.** A cover (500) as claimed in claim 17, wherein with the object sensing hardware comprises ultrasonic object sensing hardware.
